# EUROPEAN PATENT APPLICATION

(11) **EP 2 639 680 A1**
(43) Date of publication of application: **18.09.2013**
(21) Application number: 12159500.3
(22) Date of filing: 14.03.2012
(51) Int. Cl.: G06F 3/044

(54) **Touch-sensitive display with molded cover and method**

(71) Applicant: BlackBerry Limited, Waterloo ON N2L 3W8 (CA)
(72) Inventor: Walden, Norman, 44799 Bochum (DE); Thrien, Markus, 44799 Bochum (DE)
(74) Representative: Roberts, Gwilym Vaughan

(57) **Abstract**

A touch-sensitive display includes a display (112), capacitive touch sensors (114) disposed on the display (112), and a cover (702) molded on the touch sensors such that the touch sensors are disposed between the display and the cover. A method includes disposing capacitive touch sensors on a display and molding a cover over the touch sensors such that the touch sensors are disposed between the display and the cover.

## Description

### FIELD OF TECHNOLOGY

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with touch-sensitive displays are desirable.

### SUMMARY

A method includes disposing capacitive touch sensors on a display, and molding a cover over the touch sensors such that the touch sensors are disposed between the display and the cover. A touch-sensitive display includes a display, capacitive touch sensors disposed on the display, and a cover molded on the touch sensors such that the touch sensors are disposed between the display and the cover. An electronic device includes a processor, a display coupled to the processor, capacitive touch sensors disposed on the display and coupled to the processor via a controller, and a cover molded on the touch sensors such that the touch sensors are disposed between the display and the cover.

### BRIEF DESCRIPTION OF THE DRAWINGS

FIG. 1 is a block diagram of a portable electronic device in accordance with the disclosure.

FIG. 2 is a flowchart illustrating a method of molding a cover on touch sensors in accordance with the present disclosure.

FIG. 3 through FIG. 7 are sectional side views illustrating the manufacture of a touch-sensitive display in accordance with the present disclosure.

FIG. 8 is an example of a touch-sensitive display with a molded cover on a display with a polarizer in accordance with the present disclosure.

### DETAILED DESCRIPTION

The following describes a touch-sensitive display, an electronic device, and method including disposing capacitive touch sensors on a display and molding a cover over the touch sensors such that the touch sensors are disposed between the display and the cover.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

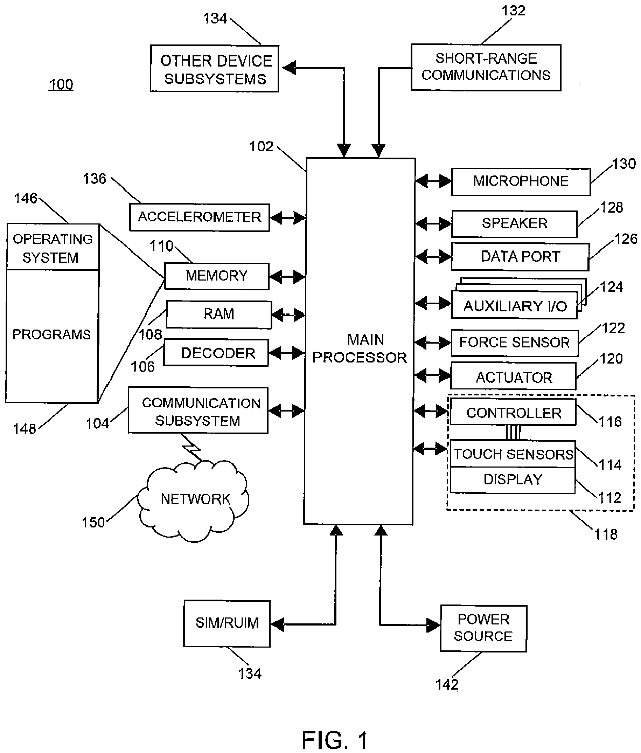

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

The touch-sensitive display 118 is a capacitive touch-sensitive display that includes capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The optional actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

In known devices, touch sensors are included in a touch-sensitive overlay that is adhered to a display and a plastic or glass cover is adhered to the touch sensors to protect the touch sensors. As described herein, a touch-sensitive display, which may be disposed in an electronic device, includes capacitive touch sensors disposed on a display with a cover imolded over the touch sensors such that the touch sensors are disposed between the display and the cover.

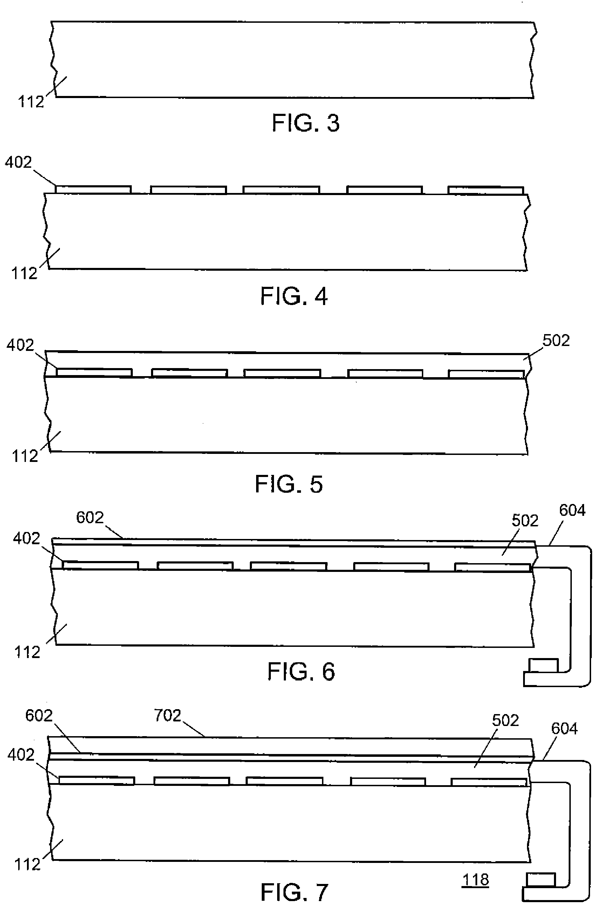

A flowchart illustrating a method of manufacturing a touch-sensitive display of an electronic device is shown in FIG. 5. The method may contain additional or fewer processes than shown and/or described, and may be performed in a different order. The order of the elements may differ from the one in the examples shown herein.

The capacitive touch sensors 114 are disposed 202 on the display 112. For example, the capacitive touch sensors 114 may be deposited on a polarizer of the display 112. The touch sensors 114, or electrodes, may be deposited, for example, by depositing a conductive material such as indium tin oxide (ITO) on the display 112, followed by laser patterning of the conductive material into desired shape(s) and arrangement.

A flex connector may be coupled 204 to the touch sensors 114, for example, by soldering the flex connector conductors to bond pads of the touch sensors 114.

A cover is molded 206 on the touch sensors, for example, by placing the display 112, including the capacitive touch sensors 114 and the flex connector, in a mold and injection molding or overmolding plastic onto the touch sensors 114. Materials other than plastic and other processes may be utilized to overmold the cover.

Sectional side views illustrating one example of a touch-sensitive display 118 are shown in FIG. 3 through FIG. 7. A display 112 is shown in FIG. 3. The display 112 may be, for example, a liquid crystal display (LCD), a light-emitting diode (LED) display, or an organic light-emitting diode (OLED) display.

In this example, the touch sensors 114 include first touch sensors 402 disposed directly on the display 112, as illustrated in FIG. 4. The first touch sensors 402 may be disposed on a polarizer of the display 112 by depositing a conductive material such as indium tin oxide (ITO) on the polarizer, followed by patterning the conductive material. In this example, the first touch sensors 402 include a plurality of touch sensors that are parallel touch sensors or electrodes.

A dielectric 502 disposed on the first touch sensors 402 is illustrated in FIG. 5. The dielectric 502 may be disposed on the first touch sensors 402, for example, by plasma enhanced chemical vapor deposition or sputter coating.

The touch sensors 114 also include second touch sensors 602 disposed on the display 112, as illustrated in FIG. 6. The second touch sensors 602 are disposed on the dielectric 502 such that the dielectric 502 is disposed between the first touch sensors 402 and the second touch sensors 602. The second touch sensors 602 may be disposed on the dielectric 502 by depositing a conductive material such as indium tin oxide (ITO), followed by patterning of the conductive material. The second touch sensors 602 include a plurality of touch sensors that are parallel touch sensors or electrodes and extend in a direction generally perpendicular to the direction of the first touch sensors 402. The second touch sensors 602 cross over the first touch sensors 402 in a grid. For example, the first touch sensors 402 may be a plurality of electrodes disposed parallel to a first axis and the second touch sensors 602 may be a plurality of electrodes disposed parallel to a second axis that is perpendicular to the first axis. Typically, the first touch sensors 402 are disposed in a first plane and the second touch sensors 602 are disposed in a second plane that is parallel to the first plane. Other materials or layers may be present that are not shown.

A flex connector 604 may be coupled to the first touch sensors 402 and to the second touch sensors 602. The flex connector 604 may be utilized to couple the first touch sensors 402 and the second touch sensors 602, for example, to a printed circuit board coupled to the controller 116. Alternatively, the controller 116 may be coupled to the flex connector 604 and fixed to the connector 604 and the remainder of the touch-sensitive display 118 during molding. The controller 116 may alternatively be integrated with a display controller and coupled to the flex connector 604.

A plastic cover 702 injection molded over the second touch sensors 602 is illustrated in FIG. 7. To mold the plastic cover 702, the display 112, the first touch sensors 402, the dielectric 502, the second touch sensors 602, and the flex connector are placed into a mold. The plastic cover 702 is overmolded over the second touch sensors 602 and the dielectric 502.

In the example described above, touch sensors 114 are deposited directly on the display 112. Alternatively, the touch sensors 114 may be deposited on a substrate, such as polyethylene terephthalate, and the substrate may be fixed to the display prior to overmolding. Optionally, the plastic cover 702 may be molded over or around sides of the display 112 to protect the display 112. Overmolding the cover over or around the sides may fix the substrate to the display, rather than utilizing adhesive. Overmolding over or around the sides may also provide protection from humidity, dust, and other environmental elements.

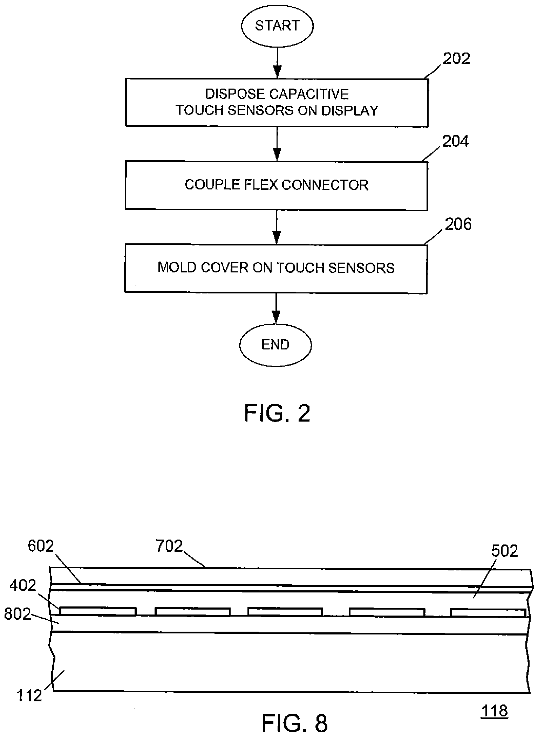

Another example of a cover 702 molded over the touch sensors 602 is illustrated in FIG. 8. The first touch sensors 402 are deposited directly on an outer layer or surface of the display 112. In this example, the outer layer or outer surface of the display 112 is a polarizer 802 or outer surface of the polarizer 802. As described above, the first touch sensors 402 are deposited directly on the polarizer 802 of the display 112. A dielectric 502 is disposed on the first touch sensors 402 and the second touch sensors 602 are disposed on the dielectric. The cover 702 is molded directly on the second touch sensors 602.

Although the touch sensors are described in the above examples as capacitive touch sensors, the touch sensors may be any type of touch sensors for any type of touch-sensitive display, such as described above.

A method includes disposing touch sensors on a display, and injection molding a cover over the touch sensors such that the touch sensors are disposed between the display and the cover. Other orders of layers are possible.

A touch-sensitive display includes a display, touch sensors disposed on the display, and a cover injection molded on the touch sensors such that the touch sensors are disposed between the display and the cover.

An electronic device includes a processor, a display coupled to the processor, touch sensors disposed on the display and coupled to the processor via a controller, and a cover injection molded on the touch sensors such that the touch sensors are disposed between the display and the cover.

The cover protects the touch sensors from the environment. By depositing the touch sensors onto the display and overmolding the cover over the display and the touch sensors, the cover bonds to the touch sensors. An adhesive is not utilized to couple the cover to the touch sensors on the touch-sensitive display, and the thickness of the touch-sensitive display is reduced. Touches on the touch-sensitive display may be more easily detected and the touch detection may be more easily controlled because of the reduced thickness when the additional adhesive layer is not present. The process of overmolding the cover may also reduce yield losses resulting from defects introduced during manufacture. Overmolding the cover also facilitates manufacturing a touch-sensitive display within tight tolerances, rather than utilizing separate parts that are later adhered to each other, increasing the tolerances and risk of contamination of the touch-sensitive display.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
disposing touch sensors on a display;
molding a cover over the touch sensors such that the touch sensors are disposed between the display and the cover.

2. The method according to claim 1, wherein molding comprises overmolding.

3. The method according to claim 1, wherein the touch sensors are disposed on the display by depositing and patterning the touch sensors on the display.

4. The method according to claim 1, wherein disposing comprises disposing first touch sensors, a dielectric, and second touch sensors, wherein the dielectric is disposed between the first touch sensors and the second touch sensors.

5. The method according to claim 1, wherein the display comprises a liquid crystal display and the touch sensors are capacitive touch sensors.

6. The method according to claim 1, wherein the injection molding comprises placing the display including the touch sensors in a mold and overmolding the cover on the touch sensors.

7. The method according to claim 1, comprising coupling an electrical connector to the touch sensors prior to molding.

8. The method according to claim 7, wherein the electrical connector is partially covered by the cover.

9. The method according to claim 1, wherein the touch sensors are disposed on a polarizer of the display.

10. A touch-sensitive display comprising:
a display;
touch sensors disposed on the display;
a cover molded on the touch sensors such that the touch sensors are disposed between the display and the cover.

11. The touch-sensitive display according to claim 10, wherein the cover is overmolded on the touch sensors.

12. The touch-sensitive display according to claim 10, wherein the touch sensors are deposited on the display.

13. The touch-sensitive display according to claim 10, wherein the touch sensors are disposed on a polarizer of the display.

14. The touch-sensitive display according to claim 10, wherein the touch sensors include first touch sensors, second touch sensors, and a dielectric disposed between the first touch sensors and the second touch sensors.

15. An electronic device comprising a processor coupled to the touch-sensitive display according to any one of claims 10 to 14.

## Amended claims

### Amended claims in accordance with Rule 137(2) EPC.

**1.** A method comprising:
depositing first touch sensors on a display;
depositing a dielectric on the first touch sensors;
depositing second touch sensors on the dielectric such that the dielectric is disposed between the first touch sensors and the second touch sensors;
molding a cover over the second touch sensors such that the first touch sensors and the second touch sensors are disposed between the display and the cover.

**2.** The method according to claim 1, wherein molding comprises overmolding.

**3.** The method according to claim 1, wherein the first touch sensors are patterned on the display.

**4.** The method according to claim 1, wherein the cover is injection molded over the second touch sensors.

**5.** The method according to claim 1, wherein the display comprises a liquid crystal display and the first touch sensors and the second touch sensors are capacitive touch sensors.

**6.** The method according to claim 1, wherein the injection molding comprises placing the display including the second touch sensors in a mold and overmolding the cover on the second touch sensors.

**7.** The method according to claim 1, comprising coupling an electrical connector to the second touch sensors prior to molding.

**8.** The method according to claim 7, wherein the electrical connector is partially covered by the cover.

**9.** The method according to claim 1, wherein the first touch sensors are deposited on a polarizer of the display.

**10.** A touch-sensitive display comprising:
a display;
first touch sensors deposited on the display;
a dielectric deposited on the first touch sensors;
second touch sensors deposited on the dielectric such that the dielectric is disposed between the first touch sensors and the second touch sensors;
a cover molded on the second touch sensors such that the first touch sensors and the second touch sensors are disposed between the display and the cover.

**11.** The touch-sensitive display according to claim 10, wherein the cover is overmolded on the second touch sensors.

**12.** The touch-sensitive display according to claim 10, wherein the touch sensors are patterned on the display.

**13.** The touch-sensitive display according to claim 10, wherein the first touch sensors are deposited on a polarizer of the display.

**14.** The touch-sensitive display according to claim 10, wherein the cover is injection molded over the second touch sensors.

**15.** An electronic device comprising a processor coupled to the touch-sensitive display according to any one of claims 10 to 14.
